# EUROPÄISCHE PATENTSCHRIFT

(11) **EP 1 337 463 B1**
(45) Veröffentlichungstag und Bekanntmachung des Hinweises auf die Patenterteilung: **26.05.2004**
(21) Anmeldenummer: 01996511.0
(22) Anmeldetag: 03.11.2001
(51) Int. Cl.: C01B 33/027, C01B 33/029, C01B 33/03, B01J 19/02

(54) **Reaktor zur Herstellung von hochreinem, granularem Silizium**
Reactor for producing highly pure, granular silicon
Réacteur pour la préparation de silicium granulaire à pureté élevée

(30) Priorität: 20.11.2000 DE 10057481
(43) Veröffentlichungstag der Anmeldung: 27.08.2003
(73) Patentinhaber: SOLARWORLD AKTIENGESELLSCHAFT, 53113 Bonn (DE)
(72) Erfinder: KÖNIG, Theo, 79725 Laufenburg (DE); PFAFFELHUBER, Matthias, League City, TX 77573 (US); HEROLD, Heiko, 41470 Neuss (DE); HOLDENRIED, Günter, 42799 Leichlingen (DE); MLECZKO, Leslaw, 44801 Bochum (DE)
(74) Vertreter: Rau, Albrecht
(86) Internationale Anmeldenummer: PCT/EP2001/012756
(87) Internationale Veröffentlichungsnummer: WO 2002/040400

(56) Entgegenhaltungen:
- US-A- 3 012 861
- US-A- 5 045 398
- US-A- 5 906 799

## Beschreibung

Die vorliegende Erfindung betrifft einen Reaktor zur Herstellung von hochreinem, granularem Silizium durch Zersetzung eines siliziumhaltigen Gases.

Unter siliziumhaltigen Gasen werden Siliziumverbindungen oder Gemische von Siliziumverbindungen verstanden, die sich unter den erfindungsgemäßen Bedingungen aus der Gasphase unter Abscheidung von Silizium zersetzen lassen. Siliziumfreie Gase im Sinne dieser Erfindung sind solche Gase, die keine Siliziumverbindungen enthalten.

Zur Gewinnung von elementarem Silizium eines Reinheitsgrades, das dessen Verwendung in der Photovoltaik beziehungsweise in der Halbleitertechnologie erlaubt, sind Verfahren zur thermischen Zersetzung von flüchtigen Siliziumverbindungen bekannt. Solche thermischen Zersetzungen können beispielsweise in Wirbelschichtreaktoren durchgeführt werden, in denen kleine Siliziumpartikel vorgelegt und diese durch Einströmen eines geeigneten siliziumhaltigen Gases oder Gasgemisches fluidisiert werden, wobei das Gasgemisch neben siliziumhaltigen auch Gase enthalten kann. Die thermische Zersetzung der flüchtigen Siliziumverbindung soll im Idealfall ausschließlich auf der Oberfläche der vorgelegten Siliziumpartikel stattfinden.

US-A-3,012,861 offenbart ein Verfahren zur Herstellung elementaren Siliziums in einem Wirbelschichtreaktor. Als Siliziumverbindungen werden Silane und Halosilane verwendet, die mit weiteren Gasen verdünnt sein können. Geeignete Gase zur Verdünnung sind etwa Argon oder Helium, im Falle von Silan kann auch Wasserstoff eingesetzt werden. Die Reaktion kann in einem großen Druckbereich durchgeführt werden. Wird als Siliziumverbindung unverdünntes SiH₄ oder SiL₁ verwendet, ist eine Reaktionsführung bei niedrigem Druck vorteilhaft.

Aus der US 5,906,799 A ist ein Verfahren zur Hydrierung von Chlorsilanen bekannt. Die dort verwendete Reaktionskammer ist aus einem mit Siliziumcarbid beschichteten Kohlenstofffaserverbundmaterial gebildet.

Die US 5,045,398 A beschreibt eine Vorrichtung und ein Verfahren zur kontinuierlichen Erzeugung geschmolzenen Siliziums aus einem geeigneten, Silizium enthaltenden Gas. Das verwendete Reaktionsgefäß besteht aus Graphit oder einem Kohlenstoffmaterial.

Um Silizium des gewünschten hohen Reinheitsgrades zu erhalten, muss verhindert werden, dass Bestandteile aus dem Reaktormantel des verwendeten Reaktors in den Reaktionsraum und damit in das gewonnene Silizium gelangen. Aus diesem Grund werden die verwendeten Reaktoren in der Regel innenseitig beschichtet, insbesondere mit einer Silizium- oder Siliziumcarbidschicht. So lassen sich beispielsweise Reaktoren aus Graphit mit einer Innenbeschichtung aus Siliziumcarbid verwenden. Beim Einsatz von Reaktoren aus Quarzglas kann auf eine Innenbeschichtung verzichtet werden, da Quarzglas in der Regel keine Bestandteile enthält, die das erzeugte Silizium verunreinigen.

Reaktoren aus Graphit oder Quarzglas sind jedoch für die großtechnische Herstellung von hochreinem, granularem Silizium durch Zersetzung eines siliziumhaltigen Gases nachteilig, da die mögliche Reaktorgröße durch die jeweiligen Materialeigenschaften stark limitiert ist.

Graphit weist zudem nicht die gewünschte Gasdichtheit auf, so dass Reaktoren aus Graphit mit einer geeigneten Innenbeschichtung versehen werden müssen, um zu verhindern, dass siliziumhaltige oder siliziumfreie Gase aus dem Reaktor diffundieren.

Der vorliegenden Erfindung lag daher die Aufgabe zugrunde, einen Reaktor bereitzustellen, mit dem hochreines, granulares Silizium durch Zersetzung eines siliziumhaltigen Gases gewonnen werden kann, der die oben beschriebenen Nachteile nicht aufweist und sich insbesondere durch Gasdichtigkeit, hohe Wärmeleitfähigkeit, eine hohe Werkstoffreinheit und eine geringe Rissempfindlichkeit auszeichnet.

Die Erfindung betrifft demnach einen Reaktor zur Herstellung von hochreinem, granularem Silizium durch Zersetzung eines siliziumhaltigen. Gases aus einem kohlefaserverstärkten Werkstoff auf Basis von Siliziumcarbid, wobei die wärmeisolierenden Bereiche am Boden des Reaktors sowie am Reaktorkopf aus einem kohlefaserverstärkten Siliziumcarbid-Werkstoff mit geringer Wärmeleitfähigkeit bestehen, während die übrigen Bereiche aus einem kohlefaserverstärkten Siliziumcarbid-Werkstoff mit hoher Wärmeleitfähigkeit aufgebaut sind.

Der erfindungsgemäß einzusetzende Reaktor aus kohlefaserverstärktem Siliziumcarbid zeichnet sich unter anderem durch Verschleißbeständigkeit, mechanische Festigkeit bei geringer Wanddicke, sowie eine hohe Wärmeleitfähigkeit und Gasdichtheit aus.

Bevorzugt besteht der Reaktor aus kohlefaserverstärktem Siliziumcarbid.

Besonders bevorzugt ist der erfindungsgemäß einzusetzende Reaktor so aufgebaut, dass die wärmeisolierenden Bereiche am Boden des Reaktors sowie am Reaktorkopf aus einem kohlefaserverstärkten Siliziumcarbid-Werkstoff mit Kohlenstoff-Überschuss bestehen, während die übrigen Bereiche aus einem kohlefaserverstärkten Siliziumcarbid-Werkstoff mit Silizium-Überschuss aufgebaut sind.

Geeignete kohlefaserverstärkte Siliziumcarbid-Werkstoffe sind bekannt und beispielsweise bei der Firma IABG mbH bzw. Daimler-Benz Aerospace (Dornier) unter der Bezeichnung C/SiC® kommerziell erhältlich.

Geeignete kohlefaserverstärkte Siliziumcarbid-Werkstoffe mit Kohlenstoff-Überschuss enthalten beispielsweise 30 bis 50 Vol.-%, vorzugsweise 35 bis 45 Vol.-% Kohlenstofffasern und 30 bis 50 Vol.-%, vorzugsweise 35 bis 45 Vol.-% Siliziumcarbid. Bei dem auf 100 Vol.-% fehlenden Anteil handelt es sich bevorzugt um Poren. Es ist jedoch auch möglich, dass der kohlefaserverstärkte Siliziumcarbid-Werkstoff mit Kohlenstoff-Überschuss neben Kohlenstofffasern und Siliziumcarbid weitere Bestandteile, z.B. Siliziumnitrid oder Verunreinigungen in einer Menge von bis zu 5 Vol.-% enthält

Bevorzugt wird als kohlefaserverstärkter Siliziumcarbid-Werkstoff mit Kohlenstoff-Überschuss ein Werkstoff mit der Bezeichnung C/SiC® Typ 16 der Firma Daimler-Benz Aerospace (Dornier) eingesetzt. Dieser Werkstoff weist etwa 40 Vol.-% Kohlenstoffasern und etwa 40 Vol.-% Siliziumcarbid auf, wobei das verbleibende Werkstoffvolumen von Poren eingenommen wird. Die Wärmeleitfähigkeit dieses Werkstoffs ist sehr niedrig und beträgt 2 bis 5 W/mK.

Geeignete kohlefaserverstärkte Siliziumcarbid-Werkstoffe mit Silizium-Überschuss enthalten beispielsweise 20 bis 40 Vol.-%, vorzugsweise 25 bis 35 Vol.-% Kohlenstofffasern, wobei diese von Siliziumcarbid umhüllt sind. Bei dem auf 100 Vol.-% fehlenden Anteil handelt es sich bevorzugt um Silizium. Es ist auch möglich, dass der kohlefaserverstärkte Siliziumcarbid-Werkstoff mit Silizium-Überschuss neben Kohlenstofffasern und Siliziumcarbid weitere Bestandteile, z.B. Siliziumnitrid oder Verunreinigungen in einer Menge von bis zu 5 Vol.-% enthält.

Bevorzugt wird als kohlefaserverstärkter Siliziumcarbid-Werkstoff mit Silizium-Überschuss ein Werkstoff mit der Bezeichnung C/SiC® Typ V32 der IABG eingesetzt. Dieser Werkstoff weist etwa 30 Vol.-% Kohlenstoff-Langfasern mit einer Faserumhüllung aus Siliziumcarbid auf, wobei das verbleibende Werkstoffvolumen von Silizium eingenommen wird. Die Wärmeleitfähigkeit dieses Werkstoffs ist hoch und beträgt etwa 70 W/mK.

Zur Herstellung von kohlefaserverstärkten keramischen Werkstoffen auf Basis von Siliziumcarbid mit Silizium-Überschuss können beispielsweise zunächst Kohlenstofffasern mit einem Harzbindemittel getränkt, danach verpresst und bei Temperaturen von etwa 2000°C gehärtet werden. Der resultierende faserverstärkte Kohlenstoff wird anschließend beispielsweise unter Vakuum und bei Temperaturen von etwa 1500°C mit flüssigem Silizium infiltriert.

Zur Herstellung von kohlefaserversiärkten keramischen Werkstoffen auf Basis von Siliziumcarbid mit Kohlenstoff-Überschuss kann beispielsweise eine keramische Matrix aus siliziumorganischen Polymeren und keramischen Füllstoffen erzeugt werden. Geeignete keramische Füllstoffe sind beispielsweise Siliziumnitrid oder Kohlenstoff. Mit dem resultierenden Schlicker können - analog zu den Verfahren für faserverstärkte Kunststoffe - durch Wickel-, Infiltrations-, oder Laminiertechniken geeignete Fasern, z.B. Kohlenstofffasern imprägniert werden. Der so entstandene Rohkörper kann anschließend im Autoklav bei einer Temperatur von 200 bis 300°C und einem Druck von 10 bis 20 bar ausgehärtet werden; dabei entsteht ein fester, mechanisch bearbeitbarer Grünkörper. Durch eine anschließende drucklose Pyrolyse in Schutzgas bei Temperaturen über 1100°C werden schließlich die Polymere in die gewünschten kohlefaserverstärkten keramischen Werkstoffen umgewandelt.

Das erfindungsgemäße Verfahren kann in verschiedenen Reaktortypen durchgeführt werden, solange der Reaktor erfindungsgemäß aus einem kohlefaserverstärkten Werkstoff auf Basis von Siliziumcarbid besteht Bevorzugt ist die Verwendung eines Wirbelschichtreaktors. Geeignete Reaktoren, insbesondere Wirbelschichtreaktoren sind bereits bekannt. Beispielhaft seien hier Reaktoren mit blasenbildender oder zirkulierender Wirbelschicht genannt, des Weiteren Sprudelbett- und Fallrohrreaktoren. Das Verfahren lässt sich beispielsweise kontinuierlich oder diskontinuierlich durchführen. Bevorzugt ist die kontinuierliche Vorgehensweise.

Die Reaktorabmessungen sind in breiten Grenzen variierbar und können optimal auf die gewünschten Reaktionsbedingungen abgestimmt werden. So lässt sich das erfindungsgemäße Verfahren bei einer Temperatur von etwa 800°C und einem Druck von etwa 200 mbar problemlos in einem zylindrischen Reaktor mit einem Durchmesser von etwa 2000 mm durchführen, wenn die Reaktorwand aus kohlefaserverstärktem Siliziumcarbid mit einer Dicke von etwa 10 - 20 mm besteht. Solche Reaktordurchmesser lassen sich beispielsweise bei Verwendung von Reaktoren aus Quarz nicht realisieren.

Der Austrag des gebildeten hochreinen, granularen Siliziums aus dem verwendeten Reaktor kann beispielsweise kontinuierlich oder absatzweise erfolgen.

Als siliziumhaltiges Gas kommen Silane, Siliziumiodide und Halosilane des Chlors, Broms und Iods in Frage. Es können auch Gemische der genannten Verbindungen verwendet werden. Dabei ist es unerheblich, ob die Siliziumverbindung bei Raumtemperatur bereits gasförmig ist oder zunächst in den Gaszustand überführt werden muss. Die Überführung in den Gaszustand kann beispielsweise thermisch erfolgen.

Bevorzugt werden Silane eingesetzt. Beispielhaft seien SiH₄, Si₂H₆, Si₃H₈, Si₄H₁₀ und Si₆H₁₄ genannt. Besonders bevorzugt ist SiH₄.

Der Druck, bei dem das erfindungsgemäße Verfahren durchgeführt wird, ist weitgehend unkritisch. Es ist jedoch vorteilhaft, bei Drucken von 50 bis 5000 mbar zu arbeiten. Alle angegebenen Druckwerte sind absolute Druckwerte. Wird das erfindungsgemäße Verfahren in einem Wirbelschichtreaktor durchgeführt, ist unter dem genannten Druck der Druck zu verstehen, der, in Strömungsrichtung des zugeführten Gasstroms gesehen, hinter der Wirbelschicht herrscht.

Es ist möglich, das erfindungsgemäße Verfahren zur Herstellung hochreinen, granularen Siliziums unter Zugabe eines siliziumfreien Gases oder einer Mischung mehrerer siliziumfreier Gase durchzuführen. Beispielsweise kann die zugesetzte Menge an siliziumfreiem Gas 0 bis 90 Vol-%, bevorzugt 0 bis 50 Vol-%, bezogen auf die Menge an insgesamt zugeführtem Gas, betragen. Der Zusatz des siliziumfreien Gases verringert die Bildung von Siliziumstaub bei der thermischen Zersetzung des siliziumhaltigen Gases. Es ist jedoch auch möglich, auf den Zusatz eines siliziumfreien Gases zu verzichten.

Geeignete siliziumfreie Gase sind beispielsweise die Edelgase, Stickstoff und Wasserstoff, wobei die siliziumfreien Gase einzeln oder in beliebiger Kombination eingesetzt werden können. Bevorzugt sind Stickstoff und Wasserstoff, besonders bevorzugt ist Wasserstoff.

Die Temperatur kann im Temperaturbereich von 300°C bis 1 400°C variiert werden. Sie muss jedoch so hoch sein, dass die Zersetzung des siliziumhaltigen Gases gewährleistet ist und darf die Schmelztemperatur des hergestellten Siliziums nicht überschreiten. Bei Verwendung von SiH₄ liegt der vorteilhafte Temperaturbereich zwischen 500°C und 1400°C. Bevorzugt ist eine Zersetzungstemperatur von 600°C bis 1000°C, besonders bevorzugt 620°C bis 800°C. Bei Verwendung von SiI₄ liegt der entsprechende Bereich zwischen 850°C und 1250°C, bei Halosilanen zwischen 500°C und 1400°C.

In einer bevorzugten Ausführungsform des erfindungsgemäßen Verfahrens werden in einem Wirbelschichtreaktor aus kohlefaserverstärktem Siliziumcarbid im Reaktionsraum Feststoffpartikel, im Weiteren Partikel genannt, vorgelegt. Die Partikel können absatzweise oder auch kontinuierlich von außen zugeführt werden. Als Partikel können jedoch auch solche Partikel Verwendung finden, die im Reaktionsraum generiert werden. Die Partikel bilden ein Festbett, durch das das zugeführte Gas eingeströmt wird. Die Einströmgeschwindigkeit des zugeführten Gases wird so eingestellt, dass das Festbett fluidisiert wird und sich eine Wirbelschicht ausbildet Die entsprechende Vorgehensweise ist dem Fachmann an und für sich bekannt Die Einströmgeschwindigkeit des zugeführten Gases muss mindestens der Lockerungsgeschwindigkeit entsprechen. Unter Lockerungsgeschwindigkeit wird dabei die Geschwindigkeit verstanden, mit der ein Gas durch ein Bett aus Partikeln strömt und unterhalb derer das Festbett erhalten bleibt, d.h. unterhalb derer die Bettpartikel weitgehend unbewegt bleiben. Oberhalb dieser Geschwindigkeit beginnt die Fluidisierung des Betts, d.h. die Bettpartikel bewegen sich und es bilden sich erste Blasen.

Die Einströmgeschwindigkeit des zugeführten Gases beträgt bei dieser bevorzugten Ausführungsform die ein- bis zehnfache, bevorzugt die eineinhalb- bis siebenfache Lockerungsgeschwindigkeit.

Vorteilhaft werden Partikel eingesetzt, die einen Durchmesser von 50 bis 5000 µm aufweisen.

Bei den verwendeten Partikeln handelt es sich vorzugsweise um Siliziumpartikel. Vorteilhafterweise haben diese Siliziumpartikel die Reinheit, die auch für das hergestellte hochreine, granulare Silizium gewünscht wird. Es ist aber auch möglich Siliziumpartikel mit bestimmten Dotierungen einzusetzen, wenn dotiertes Material gewünscht wird. Es eignen sich auch Partikel, die nicht aus Silizium bestehen, solange sie unter den Reaktionsbedingungen stabil sind.

Die Erfindung betrifft weiterhin einen Reaktor zur Herstellung von hochreinem, granularem Silizium durch Zersetzung eines siliziumhaltigen Gases, der aus einem kohlefaserverstärkten Werkstoff auf Basis von Siliziumcarbid besteht.

Bevorzugt besteht der Reaktor aus kohlefaserverstärktem Siliziumcarbid.

Vorzugsweise ist der erfindungsgemäße Reaktor so aufgebaut, dass die wärmeisolierenden Bereiche am Boden des Reaktors, sowie am Reaktorkopf aus einem kohlefaserverstärkten Siliziumcarbid-Werkstoff mit geringer Wärmeleitfähigkeit bestehen, während die übrigen Bereiche aus einem kohlefaserverstärkten Siliziumcarbid-Werkstoff mit hoher Wärmeleitfähigkeit aufgebaut sind.

Besonders bevorzugt ist der erfindungsgemäße Reaktor so aufgebaut, dass die wärmeisolierenden Bereiche am Boden des Reaktors, sowie am Reaktorkopf aus einem kohlefaserverstärkten Siliziumcarbid-Werkstoff mit Kohlenstoff-Überschuss bestehen, während die übrigen Bereiche aus einem kohlefaserverstärkten Siliziumcarbid-Werkstoff mit Silizium-Übersehuss aufgebaut sind.

Geeignete kohlefaserverstärkte keramische Siliziumcarbid-Werkstoffe sind bekannt und beispielsweise bei der Firma IABG mbH bzw. Daimler-Benz Aerospace (Dornier) unter der Bezeichnung C/SiC® kommerziell erhältlich.

Geeignete kohlefaserverstärkte Siliziumcarbid-Werkstoffe mit Kohlenstoff-Überschuss enthalten beispielsweise 30 bis 50 Vol.-%, vorzugsweise 35 bis 45 Vol.-% Kohlenstofffasern und 30 bis 50 Vol.-%, vorzugsweise 35 bis 45 Vol.-% Siliziumcarbid. Bei dem auf 100 Vol.-% fehlenden Anteil handelt es sich bevorzugt um Poren. Es ist jedoch auch möglich, dass der kohlefaserverstärkte Siliziumcarbid-Werkstoff mit Kohlenstoff-Überschuss neben Kohlenstofffasern und Siliziumcarbid weitere Bestandteile, z.B. Siliziumnitrid oder Verunreinigungen in einer Menge von bis zu 5 Vol.-% enthält.

Bevorzugt wird als kohlefaserverstärkter Siliziumcarbid-Werkstoff mit Kohlenstoff-Überschuss ein Werkstoff mit der Bezeichnung C/SiC® Typ 16 der Firma Daimler-Benz Aerospace (Dornier) eingesetzt. Dieser Werkstoff weist etwa 40 Vol.-% Kohlenstofffasern und etwa 40 Vol.-% Siliziumcarbid auf, wobei das verbleibende Werkstoffvolumen von Poren eingenommen wird. Die Wärmeleitfähigkeit dieses Werkstoffs ist sehr niedrig und beträgt 2 bis 5 W/mK.

Geeignete kohlefaserverstärkte Siliziumcarbid-Werkstoffe mit Silizium-Überschuss enthalten beispielsweise 20 bis 40 Vol.-%, vorzugsweise 25 bis 35 Vol.-% Kohlenstofffasern, wobei diese von Siliziumcarbid umhüllt sind. Bei dem auf 100 Vol.=% fehlenden Anteil handelt es sich bevorzugt um Silizium. Es ist auch möglich, dass der kohlefaserverstärkte Siliziumcarbid-Werkstoff mit Silizium-Überschuss neben Kohlenstofffasern und Siliziumcarbid weitere Bestandteile, z.B. Siliziumnitrid oder Verunreinigungen in einer Menge von bis zu 5 Vol.-% enthält.

Bevorzugt wird als kohlefaserverstärkter Siliziumcarbid-Werkstoff mit Silizium-Überschuss ein Werkstoff mit der Bezeichnung C/SiC® Typ V32 der IABG eingesetzt. Dieser Werkstoff weist etwa 30 Vol.-% Kohlenstoff-Langfasern mit einer Faserumhüllung aus Siliziumcarbid auf, wobei das verbleibende Werkstoffvolumen von Silizium eingenommen wird. Die Wärmeleitfähigkeit dieses Werkstoffs ist hoch und beträgt etwa 70 W/mK.

In einer besonderen Ausführungsform des Reaktors sind die wärmeisolierenden Bereiche am Reaktorkopf, d.h. der Deckel des Reaktors, massiv oder in mehreren, vorzugsweise in zwei Schichten aufgebaut, wobei zwischen den Schichten nebeneinander liegende Hohlkörper oder Hohlräume angeordnet sind. Vorzugsweise bestehen die Schichten aus einem Material und enthalten Hohlräume. Bevorzugt weisen die Hohlkörper oder Hohlräume einen rechteckigen Querschnitt auf und sind so angeordnet, dass sie seitlich untereinander und oben und unten mit den Schichten bündig abschließen. Durch diesen Aufbau des Deckels des Reaktors wird eine besonders gute Wärmeisolation erreicht.

Im Bodenbereich wird vorzugsweise ein dünner Ring aus dem Werkstoff C/SiC® Typ I6 der Firma Daimler-Benz Aerospace (Dornier) mit einer Dicke von etwa 1 bis 100 mm als wärmeisolierende Schicht zum gekühlten Reaktorboden eingesetzt.

Vorzugsweise handelt es sich beim erfindungsgemäßen Reaktor um einen Wirbelschichtreaktor.

Vorzugsweise besteht der Reaktor aus einem gasdichten kohlefaserverstärkten Siliziumcarbid-Werkstoff.

Der erfindungsgemäße Reaktor wird bevorzugt zur Durchführung des erfindungsgemäßen Verfahrens eingesetzt. Es sind jedoch eine Reihe anderer Anwendungen denkbar, in denen die Verwendung der erfindungsgemäßen Vorrichtung von großem Vorteil sein kann. Beispielhaft sei hier die Herstellung von Silizium durch thermische Zersetzung siliziumhaltiger Gase an einem Siliziumstab nach dem sogenannten Siemens-Verfahren genannt.

## Patentansprüche

1. Reaktor zur Herstellung von hochreinem, granularem Silizium durch Zersetzung eines siliziumhaltigen Gases, **dadurch gekennzeichnet, dass** der Reaktor aus einem kohlefaserverstärkten Werkstoff auf Basis von Siliziumcarbid besteht, wobei die wärmeisolierenden Bereiche am Boden des Reaktors, sowie am Reaktorkopf aus einem kohlefaserverstärkten Siliziumcarbid- Werkstoff mit geringer Wärmeleitfähigkeit bestehen, während die übrigen Bereiche aus einem kohlefaserverstärkten Siliziumcarbid-Werkstoff mit hoher Wärmeleitfähigkeit aufgebaut sind.

2. Reaktor nach Anspruch 1, **dadurch gekennzeichnet, dass** der Reaktor aus kohlefaserverstärktem Siliziumcarbid besteht.

3. Reaktor nach einem der Ansprüche 1 oder 2, **dadurch gekennzeichnet, dass** die wärmeisolierenden Bereiche am Boden des Reaktors, sowie am Reaktorkopf aus einem kohlefaserverstärkten Siliziumcarbid-Werkstoff mit Kohlenstoff-Überschuss bestehen, während die übrigen Bereiche aus einem kohlefaserverstärkten Siliziumcarbid-Werkstöff mit Silizium-Überschuss aufgebaut sind.

## Claims

1. A reactor for the manufacture of hyper-pure granular silicon by decomposition of a silicic gas, **characterized in that** the reactor consists of a silicon carbide-based carbon-fibre reinforced material, wherein the thermally insulating areas at the bottom of the reactor as well as at the reactor head consist of a carbon-fibre reinforced silicon carbide material with low thermal conductivity, while all other areas are made of a carbon-fibre reinforced silicon carbide material with high thermal conductivity.

2. A reactor according to Claim 1, **characterized in that** the reactor consists of carbon-fibre reinforced silicon carbide.

3. A reactor according to one of Claims 1 or 2, **characterized in that** the thermally insulating areas at the bottom of the reactor as well as at the reactor head consist of a carbon-fibre reinforced silicon carbide material with carbon excess, while all other areas are made of a carbon-fibre reinforced silicon carbide material with silicon excess.

## Revendications

1. Réacteur pour la préparation de silicium granulaire à haute pureté, par décomposition d'un gaz contenant du silicium, **caractérisé en ce que** le réacteur se compose d'un matériau à base de carbure de silicium renforcé de fibres de carbone, les zones thermiquement isolantes au fond du réacteur ainsi qu'à la tête du réacteur se composant d'un matériau de carbure de silicium à faible conductivité calorifique renforcé de fibres de carbone, tandis que les autres zones se composent d'un matériau à base de carbure de silicium renforcé de fibres de carbone à conductivité calorifique élevée.

2. Réacteur selon la revendication 1, **caractérisé en ce que** le réacteur se compose de carbure de silicium renforcé en fibres de carbone.

3. Réacteur selon l'une quelconque des revendications 1 ou 2, **caractérisé en ce que** les zones thermiquement isolantes au fond du réacteur, ainsi qu'à la tête du réacteur se composent d'un matériau de carbure de silicium à faible conductivité calorifique renforcé de fibres de carbone, tandis que les autres zones se composent d'un matériau à base de carbure de silicium renforcé de fibres de carbone à conductivité calorifique élevée avec un excédent de silicium.
